# FASCICULE DE BREVET EUROPEEN

(11) **EP 3 673 165 B1**
(45) Date de publication et mention de la délivrance du brevet: **19.07.2023**
(21) Numéro de dépôt: 18762357.4
(22) Date de dépôt: 19.07.2018
(51) Int. Cl.: F02D 41/10, F02D 13/02, F02D 41/34, F02D 41/04

(54) **PROCEDE DE PILOTAGE D'UN MOTEUR THERMIQUE EN FONCTION DE CONDITIONS THERMODYNAMIQUES DANS LES LIGNES D'ADMISSION ET D'ECHAPPEMENT**
VERFAHREN ZUM BETRIEB EINER BRENNKRAFTMASCHINE NACH THERMODYNAMISCHEN BEDINGUNGEN IN DER EINLASS- UND ABGASLEITUNG
METHOD FOR OPERATING A COMBUSTION ENGINE ACCORDING TO THE THERMODYNAMIC CONDITIONS IN THE INTAKE AND EXHAUST LINES

(30) Priorité: 22.08.2017 FR 1757789
(43) Date de publication de la demande: 01.07.2020
(73) Titulaire: PSA Automobiles SA, 78300 Poissy (FR)
(72) Inventeur: KARRER, Maxime, 75011 PARIS (FR); BERNOU, Damien, 78580 BAZEMONT (FR); GUERILLON, Sylvain, 78480 VERNEUIL SUR SEINE (FR); GUILLAUME, Pierre-Emmanuel, 76630 ENVERMEU (FR); EHRLICH, Ivan, 75001 PARIS 01 (FR)
(86) Numéro de dépôt international: PCT/FR2018/051843
(87) Numéro de publication internationale: WO 2019/038490

(56) Documents cités:
- EP-A1- 3 002 440
- WO-A1-2005/056995
- US-A1- 2004 069 054

## Description

La présente invention porte sur un procédé de pilotage d'un moteur thermique en fonction de conditions thermodynamiques dans les lignes d'admission et d'échappement. L'invention trouve une application particulièrement avantageuse pour les moteurs atmosphériques à essence à injection indirecte. Un tel moteur est par exemple décrit dans le document WO 2005/056995 A1.

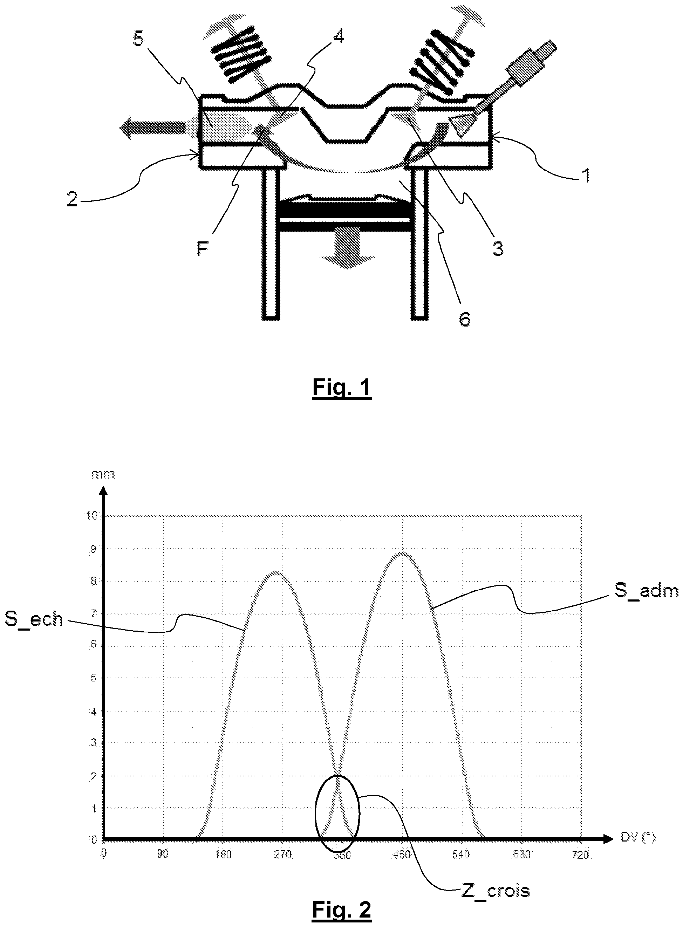

Comme cela est représenté sur la figure 1, les moteurs atmosphériques à essence peuvent être soumis dans une certaine zone du champ moteur à des phénomènes de "balayage" liés à l'acoustique du moteur et aux conditions thermodynamiques (température, pression) dans les lignes d'admission 1 et d'échappement 2. Le phénomène de "balayage" est un phénomène qui intervient lors d'une phase dite de croisement de soupapes dans laquelle les soupapes d'admission 3 et d'échappement 4 sont ouvertes simultanément (cf. zone Z_crois sur la figure 2 entre la soupape d'admission S_adm et la soupape d"échappement S_ech) et qu'une pression instantanée à l'échappement au moment du croisement est inférieure à celle de l'admission, tel que cela est représenté sur la figure 2. Dans ce cas de figure, le mélange air-carburant 5 contenu dans le conduit d'admission est balayé suivant la flèche F directement vers l'échappement et n'est pas brûlé dans la chambre de combustion 6.

Le phénomène de "balayage" dépend donc de la pression à l'échappement qui dépend de la température à l'échappement. Par conséquent, le phénomène de "balayage" engendre un comportement différent du moteur thermique lors de phases de fonctionnement stabilisé et lors de phases de fonctionnement transitoire du moteur thermique.

Actuellement, les stratégies ne sont pas adaptatives par rapport aux différents cas de vie du moteur mais calibrées en condition de fonctionnement stabilisé. La calibration du remplissage est réalisée sur banc moteur avec des conditions thermodynamiques (pression, température) stabilisées dans les lignes d'admission 1 et d'échappement 2. L'estimation par le modèle de remplissage de la quantité d'air et de carburant enfermée dans la chambre de combustion 6 et de la quantité d'air et de carburant balayée sont donc calibrées de façon précise pour ces conditions de pression (admission et échappement) au moment du croisement de soupapes 3, 4. La richesse du mélange admis dans la chambre de combustion 6 est donc maîtrisée à la stoechiométrie (richesse 1), ce qui permet de maîtriser le rendement de la combustion (performance, agrément moteur) et d'assurer la dépollution au niveau de la catalyse. Dans ces conditions, le balayage observable lors du croisement des soupapes 3, 4 est bénéfique pour le brio du moteur, dans la mesure où il permet de maximiser le remplissage en air du cylindre et donc d'atteindre les performances maximales du moteur tout en maîtrisant la dépollution.

Cependant, lorsque les conditions thermodynamiques (pression, température) dans les lignes d'admission 1 et d'échappement 2 sont différentes de celles vues lors de la calibration du remplissage sur banc moteur pour un même point de fonctionnement, la précision du modèle de remplissage est moindre et ne permet plus de garantir le bon fonctionnement du moteur à la stoechiométrie avec du "balayage". L'estimation de la quantité d'air admise dans le cylindre est moins précise, et une partie du carburant injecté est directement balayée à l'échappement entraînant les risques associés à une combustion pauvre, à savoir une baisse de performance du moteur, un risque d'à-coup du moteur avec un ressenti pour le conducteur en termes d'agrément, et un risque d'augmentation des émissions d'oxydes d'azote.

Généralement, soit aucune stratégie de "balayage" n'est utilisée ce qui diminue le couple disponible lors de phases de fonctionnement stabilisé et donc la performance du moteur; soit une stratégie de "balayage" est utilisée, mais il existe un risque de non maîtrise de la richesse en phases de fonctionnement transitoire entraînant les problématiques précitées.

La stratégie choisie est définie une fois pour toute sur chaque point de fonctionnement et en phases de fonctionnement stabilisé dans la zone usuelle de "balayage" (faible régime, forte charge). Dès que le conducteur réalise une accélération passant par ces points de fonctionnement, cette stratégie est appliquée. Celle-ci est issue d'un compromis en conditions stabilisées sur chaque point de fonctionnement et n'est pas forcément optimale dans toutes les conditions de fonctionnement du moteur thermique.

L'invention vise à remédier efficacement à cet inconvénient en proposant un procédé de pilotage d'un moteur thermique comportant des soupapes d'admission aptes à être déplacées par un premier arbre à cames, des soupapes d'échappement aptes à être déplacées par un deuxième arbre à cames, un premier déphaseur, dit d'admission, et un deuxième déphaseur, dit d'échappement, pour pouvoir modifier une position relative respective du premier arbre à cames et du deuxième arbre à cames par rapport à un vilebrequin du moteur thermique, caractérisé en ce que le procédé comporte:
- une étape de fonctionnement du moteur thermique dans un mode nominal suivant lequel est interdit ou limité un croisement entre les soupapes d'admission et les soupapes d'échappement, via une commande du déphaseur d'admission et/ou du déphaseur d'échappement,
- une étape de détection de conditions d'activation d'un mode dynamique liées à un degré d'enfoncement d'un accélérateur et à une condition de couple du moteur thermique,
- et lorsque des conditions thermodynamiques du moteur thermique sont stabilisées, lesdites conditions thermodynamiques du moteur thermique correspondant à la température et à la pression dans les lignes d'admission et d'échappement, le procédé comporte une étape d'activation du mode dynamique suivant lequel est autorisé un croisement entre les soupapes d'admission et les soupapes d'échappement via une commande du déphaseur d'admission et/ou du déphaseur d'échappement

L'invention permet ainsi, en autorisant ou non le croisement entre les soupapes d'admission et les soupapes d'échappement suivant le mode de fonctionnement du moteur thermique, de contrôler les paramètres moteur d'alimentation en air et en carburant afin de garantir le meilleur compromis entre la performance du moteur, les émissions de polluants, et l'agrément de conduite. En outre, l'invention permet d'optimiser le couple à bas régime du moteur en conditions dynamiques, tout en réduisant les émissions de polluants et sans avoir de conséquence néfaste sur le coût ni la durabilité des composants.

Selon une mise en oeuvre, une étape de temporisation est configurée pour obtenir une stabilisation de conditions thermodynamiques du moteur thermique.

Selon une mise en oeuvre, la temporisation est comprise entre 2 secondes et 10 secondes, et vaut de préférence 5 secondes.

Selon une mise en oeuvre, dans le mode dynamique, le procédé comporte une étape de modification d'un phasage de l'injection de manière à limiter une quantité de carburant injectée lors de la phase de croisement de soupapes.

Selon une mise en oeuvre, une étape d'injection de carburant est effectuée pendant une phase d'échappement avec une fin d'injection calibrée à une valeur comprise entre 400 degrés et 500 degrés vilebrequin, de préférence de l'ordre de 450 degrés vilebrequin avant un point mort haut de combustion du moteur thermique.

Selon une mise en oeuvre, une condition d'enfoncement de l'accélérateur est remplie lorsque l'enfoncement de l'accélérateur dépasse un pourcentage prédéfini d'enfoncement de l'accélérateur qui dépend du moteur thermique et d'une cartographie pédale du moteur thermique.

Selon une mise en oeuvre, le pourcentage d'enfoncement de l'accélérateur prédéfini est compris entre 70% et 90% d'un enfoncement maximal de l'accélérateur.

Selon l'invention, la condition de couple est remplie lorsque le couple du moteur thermique entre dans une zone comprise entre un couple à partir duquel est susceptible d'apparaître un phénomène de balayage et un couple maximal du moteur thermique.

Selon l'invention, la condition de couple est remplie lorsqu'un écart entre le couple maximal du moteur thermique et le couple du moteur est inférieur ou égal à un écart calibré entre un couple maximal du moteur thermique et un couple à partir duquel est susceptible d'apparaître un phénomène de balayage compris entre 20 N.m à 40 N.m.

L'invention a également pour objet un calculateur moteur comportant une mémoire stockant des instructions logicielles pour la mise en oeuvre du procédé de pilotage d'un moteur thermique tel que précédemment défini.

L'invention sera mieux comprise à la lecture de la description qui suit et à l'examen des figures qui l'accompagnent. Ces figures ne sont données qu'à titre illustratif mais nullement limitatif de l'invention.
La figure 1, déjà décrite, est une représentation schématique partielle d'un moteur thermique illustrant le phénomène de balayage observable lors d'un croisement de soupapes pour une pression à l'échappement inférieure à une pression à l'admission;
La figure 2, déjà décrite, est une représentation graphique des levées de soupapes en fonction d'un angle de vilebrequin montrant une zone de croisement de soupapes;
La figure 3 est une représentation schématique partielle d'un moteur thermique apte à mettre en oeuvre le procédé selon l'invention;
Les figures 4a à 4c sont des représentations graphiques illustrant respectivement une évolution temporelle de la richesse de combustion dans le moteur thermique, du couple moteur, et de l'émission d'hydrocarbures lors d'une coupure d'injection respectivement avec limitation ou non du phénomène de balayage à une valeur de régime de 2750 tours par minute;
Les figures 5 et 6 sont des représentations schématiques des étapes du procédé de pilotage d'un moteur thermique en fonction de conditions thermodynamiques dans les lignes d'admission et d'échappement;
La figure 7 est un schéma illustrant le référentiel de phasage de l'injection du moteur thermique;
La figure 8 est une représentation graphique d'un écart calibré de couple par rapport à un couple maximal du moteur thermique utilisé dans la définition de la condition de couple à remplir pour activer le mode dynamique de fonctionnement du moteur thermique;
Les figures 9a et 9b sont des représentations graphiques illustrant respectivement une évolution temporelle de la richesse de combustion dans le moteur thermique et du couple moteur lors d'une mise en oeuvre du procédé selon la présente invention.

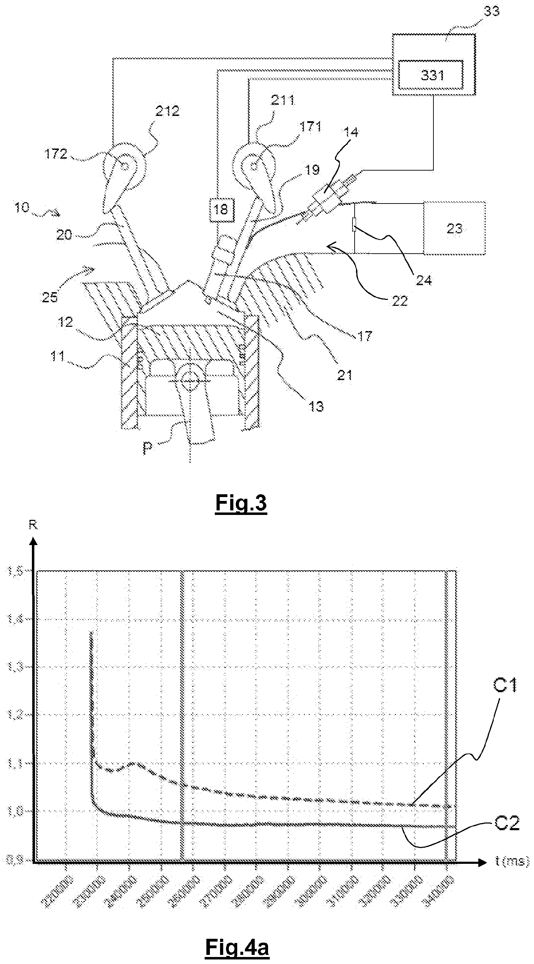

La figure 3 montre une vue en coupe schématique partielle d'un moteur thermique 10 comportant une pluralité de cylindres 11 par exemple au nombre de trois ou quatre. Ce moteur thermique 10 est un moteur à essence à injection indirecte.

Chaque cylindre 11 comporte un piston 12, une chambre de combustion 13, un injecteur de carburant 14 positionné dans le conduit d'admission et en amont des soupapes d'admission, une bougie d'allumage 17 associée à un système 18 de réglage d'angle d'avance à l'allumage, au moins une soupape d'admission 19, au moins une soupape d'échappement 20. La chambre de combustion 13 est ainsi définie dans le cylindre 11 entre la face inférieure d'une culasse 21 et la face supérieure du piston 12.

La bougie d'allumage 17 liée à la culasse 21 est dotée d'électrodes qui produisent une étincelle dans la chambre de combustion 13 lorsque le piston 12 est au voisinage de son point mort haut. Les soupapes d'admission 19 et d'échappement 20 sont montées mobiles dans la culasse 21 et sont disposées de part et d'autre d'un plan axial médian P du cylindre 11 de manière à définir un côté admission et un côté échappement.

Les soupapes d'admission 19 sont déplacées par un premier arbre à cames 171 de manière à mettre la chambre de combustion 13, à un instant choisi précédant la compression, en communication avec un conduit d'admission 22 relié à un répartiteur d'admission 23. Une vanne 24, sous forme d'un papillon, assure la gestion du débit d'air issu du répartiteur 23 introduit dans le cylindre 11.

De façon analogue, les soupapes d'échappement 20 sont déplacées par un deuxième arbre à cames 172 de manière à mettre la chambre de combustion 13 à un instant choisi postérieur à la combustion, en communication avec un conduit d'échappement 25.

La position relative de chaque arbre à cames 171, 172 par rapport au vilebrequin du moteur 10 (non représenté) peut être modifiée respectivement au moyen d'un premier déphaseur 211 dit d'admission et d'un deuxième déphaseur 212 dit d'échappement. Chaque déphaseur 211, 212 pourra être commandé hydrauliquement ou électriquement. Les déphaseurs 211, 212 permettent ainsi, suivant les conditions de fonctionnement, d'avancer ou de retarder l'ouverture et/ou la fermeture des soupapes d'admission 19 et d'échappement 20 par rapport à un mode de fonctionnement de référence.

En outre, le moteur thermique 10 comporte un catalyseur trois voies en aval de la chambre de combustion 13. Ce catalyseur peut être composé d'un ou de plusieurs pains catalytiques avec des géométries et caractéristiques diverses. Un moyen de détermination de la température en sortie du moteur et/ou en entrée du catalyseur peut prendre la forme d'un capteur et/ou d'un modèle. Une sonde lambda (linéaire ou deux points) en amont du catalyseur permet de déterminer la richesse des gaz.

Un calculateur moteur 33 assure la commande des différents éléments de l'architecture du moteur 10 en fonction notamment de données issues de différents capteurs implantés dans le système. Ce calculateur 33 comporte à cet effet une mémoire 331 stockant des instructions logicielles pour la mise en oeuvre du procédé de pilotage du moteur thermique selon l'invention.

Le moteur 10 peut être soumis dans une certaine zone du champ moteur à des phénomènes de balayage liés à l'acoustique du moteur 10 et aux conditions thermodynamiques (température, pression) dans les lignes d'admission 22 et d'échappement 25. Le phénomène de balayage est un phénomène qui intervient lorsqu'on combine une zone de croisement de soupapes d'admission 19 et d'échappement 20 ouvertes simultanément et qu'une pression instantanée à l'échappement au moment du croisement est inférieure à celle de l'admission. Dans ce cas de figure, le mélange air-carburant contenu dans le conduit d'admission 22 est balayé directement vers l'échappement 25 et n'est pas brûlé dans la chambre de combustion 13.

Le phénomène de balayage dépend donc de la pression à l'échappement qui dépend de la température à l'échappement. Par conséquent le phénomène de balayage a un comportement différent dans une phase de fonctionnement stabilisé du moteur thermique 10, qui est le cas de vie calibré sur banc moteur, et dans une phase de fonctionnement transitoire du moteur 10.

Dans le cas par exemple d'un point de fonctionnement du moteur thermique à 2750 tours par minute en pleine charge, les essais montrent que, dans une phase de fonctionnement stabilisé, le meilleur réglage favorisant la performance et les émissions de polluants correspond à l'activation d'une stratégie de balayage.

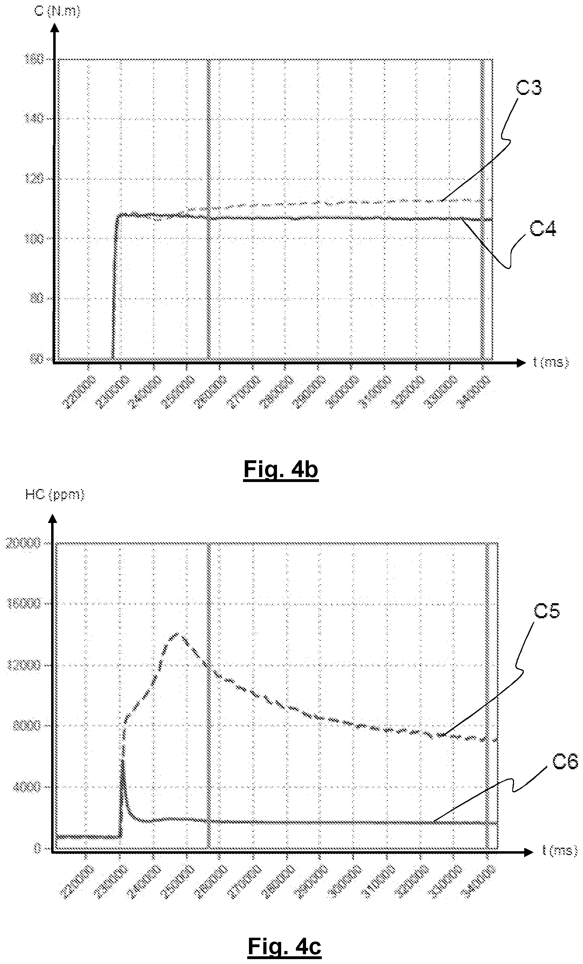

Dans le cas réel d'un conducteur qui réalise un long lâché de pied suivi d'une accélération, lors de la coupure d'injection associée au lâché de pied, une forte quantité d'air frais est envoyée dans la ligne d'échappement 25, ce qui génère un refroidissement de cette ligne 25. Si le conducteur accélère ensuite pour rejoindre la zone de fonctionnement concernée par le balayage, la pression dans la ligne d'échappement 25 pourra être plus faible que celle vue lors de la calibration sur banc moteur, du fait d'une température plus faible entraînant un balayage plus fort que celui calibré pour une même surface de croisement de soupape 19, 20. On observe alors une combustion pauvre (cf. courbe C1 de la figure 4a montrant l'évolution de la richesse R en fonction du temps t), entraînant une baisse de couple (cf. courbe C3 de la figure 4b montrant l'évolution du couple C du moteur en fonction du temps t) associé à des à-coups et un pic d'émissions d'hydrocarbures (cf. courbe C5 de la figure 4c montrant l'évolution des émissions d'hydrocarbures HC en fonction du temps t).

En limitant ou en interdisant, lors de la phase de fonctionnement transitoire du moteur 10, la surface de croissement de soupapes 19, 20, cela permet d'éviter les effets négatifs du balayage en maîtrisant la richesse dans la chambre de combustion 13 (cf. courbe C2 de la figure 4a), en évitant le creux de couple (cf. courbe C4 de la figure 4b), ainsi qu'en évitant le pic d'hydrocarbures (cf. courbe C6 de la figure 4c). Toutefois, les courbes C3 et C4 de la figure 4b mettent en évidence que lorsque les conditions thermodynamiques se stabilisent dans le temps, la performance du moteur 10 atteinte sans croisement de soupapes 19, 20 est inférieure à celle obtenue avec du croisement de soupapes 19, 20.

Comme cela est représenté sur le tableau ci-dessous, les mesures de couples réalisées démontrent que le meilleur comportement dynamique est obtenu en limitant ou en interdisant le croisement de soupapes 19, 20 sur les phases de fonctionnement transitoires du moteur dans la zone de balayage, et en autorisant le croisement de soupapes 19, 20 entraînant du balayage lorsque les conditions thermodynamiques sont stabilisées.

| 2750 tours/minute | Couple en stabilisé (conditions thermodynamiques stabilisées) | Couple à 10s après réinjection |
|---|---|---|
| Sans limitation du phénomène de "balayage" | 113Nm | 106Nm |
| Avec limitation du phénomène de "balayage" | 106Nm | 108Nm |

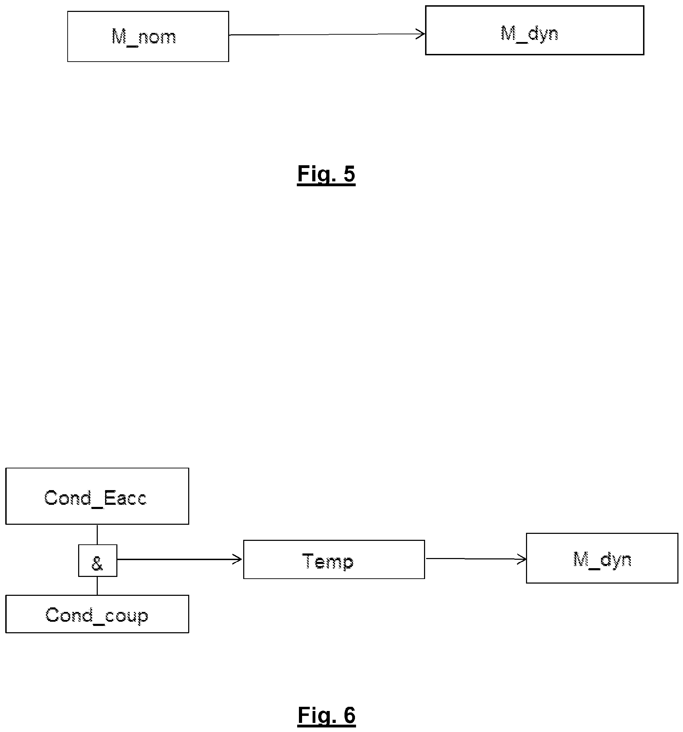

Plus précisément, comme cela est représenté sur la figure 5, le procédé selon l'invention consiste, en adaptant la commande du déphaseur d'admission 211 et/ou d'échappement 212, à interdire le phénomène de balayage dans un mode de fonctionnement nominal M_nom. Le mode nominal M_nom correspond à un mode de fonctionnement du moteur 10 suivant lequel le couple moteur est inférieur au couple maximum et aucune forte sollicitation du moteur 10 n'est demandée par le conducteur, en sorte que le croisement de soupapes 19, 20 est interdit ou limité en imposant une surface de croisement inférieure à un seuil.

En outre, le procédé prévoit un mode dynamique M_dyn autorisant, par commande du déphaseur d'admission 211 et/ou du déphaseur d'échappement 212, le phénomène de balayage lorsque les conditions thermodynamiques du moteur 10 le permettent et lorsque la volonté du conducteur est de tirer profit des performances maximales du moteur thermique 10.

Le mode dynamique M_dyn peut également permettre de modifier le phasage de l'injection de manière à limiter la quantité de carburant injectée lors de la phase de croisement de soupapes 19, 20 et qui est donc directement balayée à l'échappement.

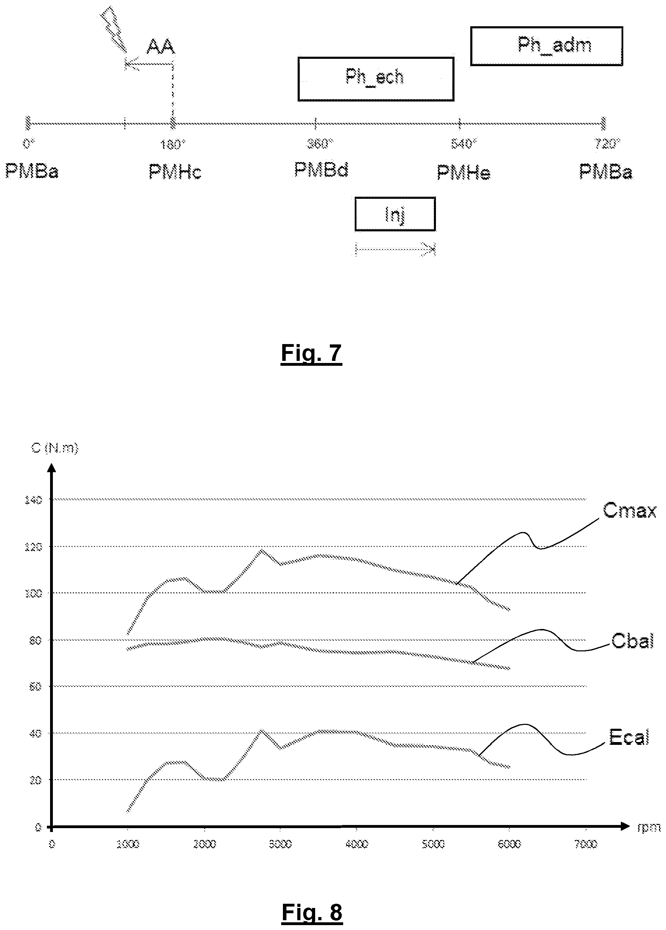

Selon un exemple de mise en oeuvre représenté sur la figure 7, l'étape d'injection de carburant Inj est effectuée pendant une phase d'échappement Ph_ech avec une fin d'injection calibrée à une valeur comprise entre 400 degrés et 500 degrés vilebrequin, de préférence de l'ordre de 450 degrés vilebrequin avant un point mort haut de combustion PMHc du moteur thermique 10. On note également que sur cette figure, la phase d'admission est référencée Ph_adm. Par ailleurs, le point mort bas d'amission PMBa se situe à 0 degré vilebrequin, le point mort bas de détente PMBd se situe à 360 degrés vilebrequin, et le point mort haut d'échappement PMHe se situe à 540 degrés vilebrequin. L'avance à l'allumage est référencée AA.

Les conditions d'activation du mode dynamique M_dyn, détaillées sur la figure 6, sont liées à une condition d'enfoncement de l'accélérateur et à une condition de couple du moteur thermique 10.

La condition d'enfoncement de l'accélérateur Cond_Eacc traduit la notion de "forte sollicitation" de la part du conducteur. La condition d'enfoncement de l'accélérateur Cond_Eacc est remplie lorsque l'enfoncement de l'accélérateur dépasse un pourcentage prédéfini d'enfoncement de l'accélérateur qui dépend du moteur thermique 10 et d'une cartographie pédale du moteur thermique 10. Ce critère permet d'activer la stratégie uniquement quand il y a un risque de transiter rapidement d'un point peu chargé ou les températures à l'échappement sont faibles vers un point fortement chargé. Le pourcentage d'enfoncement de l'accélérateur prédéfini est compris par exemple entre 70% et 90% de l'enfoncement maximal de l'accélérateur.

La condition de couple Cond_coup permet d'autoriser le croisement de soupapes 19, 20 dans la zone du champ moteur dans laquelle est susceptible d'apparaitre le phénomène de balayage. Comme cela est représenté sur la figure 8, la condition de couple Cond_coup est remplie lorsqu'un écart entre le couple maximal Cmax du moteur thermique 10 et le couple du moteur est inférieur ou égal à un écart calibré Ecal entre un couple maximal Cmax du moteur 10 et un couple Cbal à partir duquel est susceptible d'apparaître un phénomène de balayage compris notamment entre 20 N.m à 40 N.m.

En outre, une temporisation Temp traduit la notion de stabilisation des conditions thermodynamiques permettant de bien maîtriser le fonctionnement du moteur 10 sous balayage. Des essais sont réalisés pour déterminer ce seuil temporel qui permet d'atteindre des conditions thermodynamiques dans les lignes admission 19 et échappement 20 suffisamment proches des conditions relevées lors de la calibration sur banc moteur pour garantir la bonne gestion du remplissage en air et en carburant. Suivant une mise en oeuvre particulière du procédé, la temporisation Temp est comprise entre 2 secondes et 10 secondes, et vaut de préférence 5 secondes.

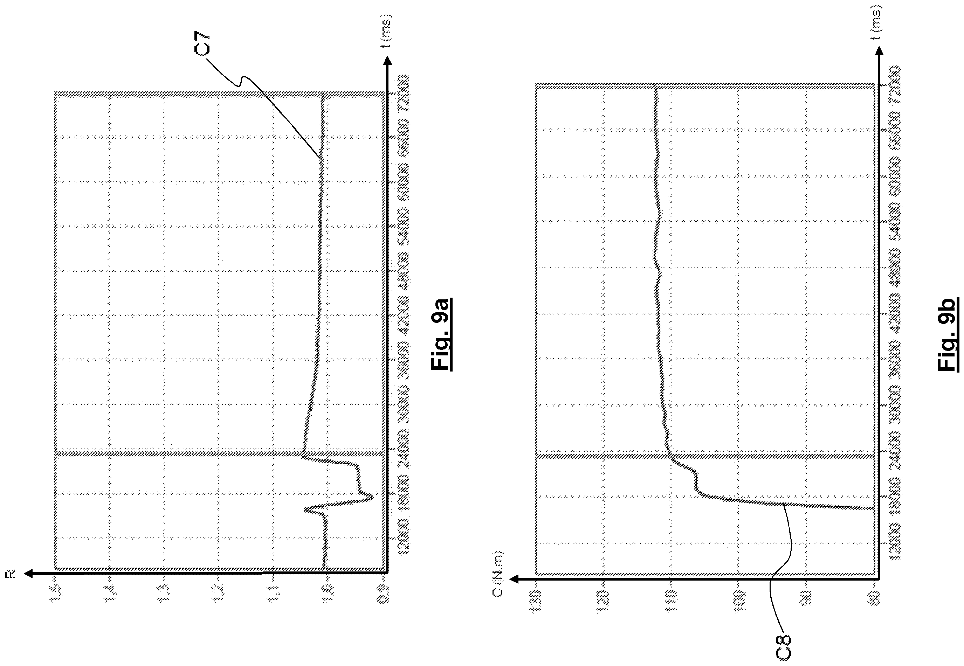

Les figures 9a et 9b illustrent un exemple de mise en oeuvre du procédé selon l'invention sur une phase de fonctionnement transitoire de régime charge permettant d'atteindre le point de fonctionnement précédemment cité en exemple, à savoir 2750 tours par minute. On constate qu'en appliquant une temporisation Temp de 5 secondes avant d'autoriser le balayage, on obtient une bonne maîtrise de la richesse (cf. courbe C7 de la figure 9a montrant l'évolution de la richesse R en fonction du temps t) et donc une absence de creux de couple (cf. courbe C8 de la figure 9b montrant l'évolution du couple C du moteur en fonction du temps t). Le procédé selon l'invention permet ainsi d'obtenir le meilleur compromis possible entre performance et émissions polluantes, aussi bien en phase de fonctionnement transitoire qu'en phase de fonctionnement stabilisé du moteur thermique 10.

## Revendications

1. Procédé de pilotage d'un moteur thermique (10) comportant des soupapes d'admission (19) aptes à être déplacées par un premier arbre à cames (171), des soupapes d'échappement (20) aptes à être déplacées par un deuxième arbre à cames (172), un premier déphaseur (211), dit d'admission, et un deuxième déphaseur (212), dit d'échappement, pour pouvoir modifier une position relative respective du premier arbre à cames (171) et du deuxième arbre à cames (172) par rapport à un vilebrequin du moteur thermique (10), ledit procédé comportant:
- une étape de fonctionnement du moteur thermique (10) dans un mode nominal (M_nom) suivant lequel est interdit ou limité un croisement entre les soupapes d'admission (19) et les soupapes d'échappement (20), via une commande du déphaseur d'admission (211) et/ou du déphaseur d'échappement (212),
- une étape de détection de conditions d'activation d'un mode dynamique (M_dyn) liées à un degré d'enfoncement d'un accélérateur et à une condition de couple (Cond_coup) du moteur thermique (10),
- et lorsque des conditions thermodynamiques du moteur thermique (10) sont stabilisées, lesdites conditions thermodynamiques du moteur thermique (10) correspondant à la température et à la pression dans les lignes d'admission et d'échappement, ledit procédé comporte une étape d'activation dudit mode dynamique (M_dyn) suivant lequel est autorisé un croisement entre les soupapes d'admission (19) et les soupapes d'échappement (20) via une commande du déphaseur d'admission (211) et/ou du déphaseur d'échappement (212), le procédé étant tel que la condition de couple (Cond_coup) est remplie lorsque le couple du moteur thermique (10) entre dans une zone comprise entre un couple à partir duquel est susceptible d'apparaître un phénomène de balayage et un couple maximal (Cmax) du moteur thermique (10), la condition de couple (Cond_coup) étant remplie lorsqu'un écart entre le couple maximal (Cmax) du moteur thermique (10) et le couple du moteur est inférieur ou égal à un écart calibré (Ecal) entre un couple maximal (Cmax) du moteur thermique (10) et un couple à partir duquel est susceptible d'apparaître un phénomène de balayage compris entre 20 N.m à 40 N.m.

2. Procédé selon la revendication 1, **caractérisé en ce que** la condition d'enfoncement de l'accélérateur est remplie lorsque l'enfoncement de l'accélérateur dépasse un pourcentage prédéfini d'enfoncement de l'accélérateur qui dépend du moteur thermique (10) et d'une cartographie pédale dudit moteur thermique (10).

3. Procédé selon la revendication 2, **caractérisé en ce que** le pourcentage d'enfoncement de l'accélérateur prédéfini est compris entre 70% et 90% d'un enfoncement maximal de l'accélérateur.

4. Procédé selon l'une quelconque des revendications 2 ou 3, **caractérisé en ce qu'**une étape de temporisation (Temp) est configurée pour obtenir une stabilisation des conditions thermodynamiques du moteur thermique (10), ladite étape de temporisation (Temp) faisant suite à l'étape où est remplie la condition d'enfoncement de l'accélérateur.

5. Procédé selon la revendication 4, **caractérisé en ce que** la temporisation (Temp) est comprise entre 2 secondes et 10 secondes, et vaut de préférence 5 secondes.

6. Procédé selon l'une quelconque des revendications précédentes, **caractérisé en ce que**, dans le mode dynamique (M _dyn), le procédé comporte une étape de modification d'un phasage de l'injection de manière à limiter une quantité de carburant injectée lors de la phase de croisement de soupapes (19, 20).

7. Procédé selon la revendication 6, **caractérisé en ce qu'**une étape d'injection (Inj) de carburant est effectuée pendant une phase d'échappement (Ph_ech) avec une fin d'injection (Inj) calibrée à une valeur comprise entre 400 degrés et 500 degrés vilebrequin, de préférence de l'ordre de 450 degrés vilebrequin avant un point mort haut de combustion (PMHc) du moteur thermique (10), le point mort bas d'admission (PMBa) se situant à 0 degré vilebrequin.

8. Calculateur moteur (33) comportant une mémoire (331) stockant des instructions logicielles pour la mise en oeuvre du procédé de pilotage d'un moteur thermique (10) tel que défini selon l'une quelconque des revendications précédentes, ledit moteur thermique (10) comportant des soupapes d'admission (19) aptes à être déplacées par un premier arbre à cames (171), des soupapes d'échappement (20) aptes à être déplacées par un deuxième arbre à cames (172), un premier déphaseur (211 ), dit d'admission, et un deuxième déphaseur (212), dit d'échappement, pour pouvoir modifier une position relative respective du premier arbre à cames (171) et du deuxième arbre à cames (172) par rapport à un vilebrequin du moteur thermique (10).

## Patentansprüche

1. Verfahren zum Steuern einer Wärmekraftmaschine (10), umfassend Einlassventile (19), die durch eine erste Nockenwelle (171) bewegt werden können, Auslassventile (20), die durch eine zweite Nocke (172) bewegt werden können, einen ersten Phasenschieber (211 ), Einlaß genannt, und einem zweiten Phasenschieber (212), genannt Abgas, um in der Lage zu sein, eine jeweilige relative Position der ersten Nockenwelle (171) und der zweiten Nockenwelle (172) in Bezug auf eine Kurbelwelle der Wärmekraftmaschine (10) zu modifizieren, wobei das Verfahren umfasst:
- einen Schritt des Betreibens des Verbrennungsmotors (10) in einem Nennmodus (M_nom), gemäß dem der Übergang zwischen den Einlassventilen (19) und den Auslassventilen (20) über eine Steuerung des Phasenschiebereinlasses verhindert oder begrenzt wird ( 211) und/oder Abgasphasenschieber (212),
- einen Schritt zum Erfassen von Bedingungen zum Aktivieren eines dynamischen Modus (M_dyn), die mit einem Niederdrückgrad eines Gaspedals und einem Drehmomentzustand (Cond_coup) der Wärmekraftmaschine (10) verknüpft sind,
- und wenn die thermodynamischen Bedingungen der Wärmekraftmaschine (10) stabilisiert sind, wobei die thermodynamischen Bedingungen der Wärmekraftmaschine (10) der Temperatur und dem Druck in den Einlass- und Auslassleitungen entsprechen, umfasst das Verfahren einen Schritt der Aktivierung der Dynamik Modus (M_dyn), gemäß dem ein Kreuzen zwischen den Einlassventilen (19) und den Auslassventilen (20) über eine Steuerung des Einlassphasenschiebers (211) und/oder des Auslassphasenschiebers (212) zugelassen wird, wobei das Verfahren ist so dass die Drehmomentbedingung (Cond_coup) erfüllt ist, wenn das Drehmoment der Wärmekraftmaschine (10) in eine Zone eintritt, die zwischen einem Drehmoment, von dem wahrscheinlich ein Spülphänomen auftritt, und einem Drehmoment (Cmax) der Wärmekraftmaschine (10) umfasst ist. , wobei die Drehmomentbedingung (Cond_coup) erfüllt ist, wenn eine Differenz zwischen dem maximalen Drehmoment (Cmax) der Wärmekraftmaschine (10) und dem Drehmoment des Motors kleiner oder gleich einer kalibrierten Differenz (Ecal) zwischen einem maximalen Drehmoment (Cmax ) der Wärmekraftmaschine (10) und ein Drehmoment, bei dem wahrscheinlich ein Kehrphänomen zwischen 20 N.m und 40 N.m auftritt.

2. Verfahren nach Anspruch 1, **dadurch gekennzeichnet, dass** die Bedingung des Niederdrückens des Gaspedals erfüllt ist, wenn das Niederdrücken des Gaspedals einen vordefinierten Prozentsatz des Niederdrückens des Gaspedals überschreitet, der von der Wärmekraftmaschine (10) und einem Pedalkennfeld der Wärmekraftmaschine abhängt (10).

3. Verfahren nach Anspruch 2, **dadurch gekennzeichnet, dass** der vordefinierte Prozentsatz des Niederdrückens des Gaspedals zwischen 70 % und 90 % einer maximalen Beschleunigung des Gaspedals liegt.

4. Verfahren nach einem der Ansprüche 2 oder 3, **dadurch gekennzeichnet, dass** ein Verzögerungsschritt (Temp) konfiguriert ist, um eine Stabilisierung der thermodynamischen Bedingungen der Wärmekraftmaschine (10) zu erreichen, wobei der Verzögerungsschritt (Temp) dem Schritt folgt, bei dem das Gaspedal niedergedrückt wird Bedingung ist erfüllt.

5. Verfahren nach Anspruch 4, **dadurch gekennzeichnet, dass** die Verzögerung (Temp) zwischen 2 Sekunden und 10 Sekunden liegt und vorzugsweise 5 Sekunden beträgt.

6. Verfahren nach einem der vorhergehenden Ansprüche, **dadurch gekennzeichnet, dass** das Verfahren im dynamischen Modus (M dyn) einen Schritt des Modifizierens einer Einspritzphasenlage umfasst, um eine Kraftstoffmenge zu begrenzen, die während der Ventilüberquerungsphase (19) eingespritzt wird. (20).

7. Verfahren nach Anspruch 6, **dadurch gekennzeichnet, dass** ein Kraftstoffeinspritzschritt (Inj) während einer Auslassphase (Ph_ech) mit einem Einspritzende (Inj) durchgeführt wird, das auf einen Wert zwischen 400 Grad und 500 Grad Kurbelwelle, vorzugsweise in der Größenordnung, kalibriert ist von 450 Grad Kurbelwelle vor dem oberen Totpunkt der Verbrennung (PMHc) der Wärmekraftmaschine (10), wobei der untere Totpunkt des Einlasses (PMBa) bei 0 Grad Kurbelwelle angeordnet ist.

8. Motorcomputer (33), der einen Speicher (331) umfasst, der Softwarebefehle zum Implementieren des Verfahrens zum Steuern einer Wärmekraftmaschine (10) nach einem der vorhergehenden Ansprüche speichert, wobei die Wärmekraftmaschine (10) Einlassventile (19) umfassen kann von einer ersten Nockenwelle (171) zu bewegende Auslassventile (20), die von einer zweiten Nockenwelle (172) bewegt werden können, einen ersten Phasenschieber (211), Einlass genannt, und einen zweiten Phasenschieber (212), Auslass genannt, um eine jeweilige Relativposition der ersten Nockenwelle (171) und der zweiten Nockenwelle (172) gegenüber einer Kurbelwelle der Wärmekraftmaschine (10) verändern zu können.

## Claims

1. Method for controlling a heat engine (10) comprising intake valves (19) able to be moved by a first camshaft (171), exhaust valves (20) able to be moved by a second cam (172), a first phase shifter (211), called intake, and a second phase shifter (212), called exhaust, in order to be able to modify a respective relative position of the first camshaft (171) and of the second camshaft (172) with respect to a crankshaft of the heat engine (10), the said method comprising:
- a step of operating the thermal engine (10) in a nominal mode (M_nom) according to which crossing between the intake valves (19) and the exhaust valves (20) is prohibited or limited, via a control of the phase shifter intake (211) and/or exhaust phase shifter (212),
- a step of detecting conditions for activating a dynamic mode (M_dyn) linked to a degree of depression of an accelerator and to a torque condition (Cond_coup) of the heat engine (10),
- and when the thermodynamic conditions of the heat engine (10) are stabilized, said thermodynamic conditions of the heat engine (10) corresponding to the temperature and the pressure in the intake and exhaust lines, said method comprises a step of activation of said dynamic mode (M_dyn) according to which crossing is authorized between the intake valves (19) and the exhaust valves (20) via a control of the intake phase shifter (211) and/or of the exhaust phase shifter (212), the method being such that the torque condition (Cond_coup) is fulfilled when the torque of the heat engine (10) enters a zone comprised between a torque from which a scavenging phenomenon is likely to appear and a torque torque (Cmax) of the heat engine (10), the torque condition (Cond_coup) being fulfilled when a difference between the maximum torque (Cmax) of the heat engine (10) and the torque of the engine is less than or equal to a calibrated difference (Ecal) between a maximum torque (Cmax) of the heat engine (10) and a torque from which a sweeping phenomenon of between 20 N.m to 40 N.m is likely to appear.

2. Method according to Claim 1, **characterized in that** the condition of depression of the accelerator is fulfilled when the depression of the accelerator exceeds a predefined percentage of depression of the accelerator which depends on the heat engine (10) and a pedal map of said heat engine (10).

3. Method according to claim 2, **characterized in that** the predefined percentage of accelerator depression is between 70% and 90% of a maximum acceleration of the accelerator.

4. Method according to any one of Claims 2 or 3, **characterized in that** a delay step (Temp) is configured to obtain stabilization of the thermodynamic conditions of the heat engine (10), said delay step (Temp) following the step where the accelerator depression condition is fulfilled.

5. Process according to Claim 4, **characterized in that** the delay (Temp) is between 2 seconds and 10 seconds, and is preferably 5 seconds.

6. Method according to any one of the preceding claims, **characterized in that**, in the dynamic mode (M dyn), the method comprises a step of modifying an injection phasing so as to limit a quantity of fuel injected during the valve crossing phase (19, 20).

7. Method according to Claim 6, **characterized in that** a fuel injection step (Inj) is carried out during an exhaust phase (Ph_ech) with an end of injection (Inj) calibrated at a value between 400 degrees and 500 crankshaft degrees, preferably of the order of 450 crankshaft degrees before combustion top dead center (PMHc) of the heat engine (10), the intake bottom dead center (PMBa) being located at 0 crankshaft degrees.

8. Engine computer (33) comprising a memory (331) storing software instructions for implementing the method for controlling a heat engine (10) as defined according to any one of the preceding claims, said heat engine (10) comprising intake valves (19) able to be moved by a first camshaft (171), exhaust valves (20) able to be moved by a second camshaft (172), a first phase shifter (211 ), called intake, and a second phase shifter (212), called exhaust, in order to be able to modify a respective relative position of the first camshaft (171) and of the second camshaft (172) with respect to a crankshaft of the heat engine (10).
